# EUROPEAN PATENT SPECIFICATION

(11) **EP 3 467 304 B1**
(45) Date of publication and mention of the grant of the patent: **16.12.2020**
(21) Application number: 16903009.5
(22) Date of filing: 27.05.2016
(51) Int. Cl.: F03D 13/20, F03D 1/00, E04H 12/10, E04H 12/34, F03D 13/10

(54) **TOWER SECTION FOR AUTOMATICALLY RAISING A WIND TURBINE AND AUTOMATIC RAISING METHOD FOR SAME**
TURMABSCHNITTS ZUM AUTOMATISCHEN ANHEBEN EINER WINDTURBINE UND VERFAHREN ZUM AUTOMATISCHEN ANHEBEN DAFÜR
SEGMENT DE TOUR POUR AUTO-HISSER UNE ÉOLIENNE ET PROCÉDÉ D'AUTO-HISSAGE DE CELUI-CI

(43) Date of publication of application: 10.04.2019
(73) Proprietor: Nabrawind Technologies SL, 31002 Pamplona (ES)
(72) Inventor: GARCIA PEREZ, Ana Cristina, Sarrigure - Egües (Navarra) (ES); AROCENA DE LA RÚA, Ion, 31001 Pamplona (Navarra) (ES); SANZ PASCUAL, Eneko, 31002 Pamplona (Navarra) (ES); SAVII COSTA, Hely Ricardo, 31133 Uterga (Navarra) (ES)
(74) Representative: Igartua, Ismael
(86) International application number: PCT/ES2016/000064
(87) International publication number: WO 2017/203065

(56) References cited:
- WO-A1-2015/150594
- CA-A1- 2 924 257
- DE-C- 736 454
- ES-A1- 2 389 345
- ES-A1- 2 398 834
- ES-T3- 2 526 922
- JP-A- 2005 042 313
- US-A1- 2014 260 076
- US-A1- 2014 328 632

## Description

### Field of the invention

This invention is encompassed within the field of wind turbines, their automatic raising method and, in particular, the way in which, by means of a lattice tower section, with its corresponding top transition piece and its footing, the raising is performed for a new wind turbine or for an already existing one using an already known external automatic raising system.

### Background of the invention

The search for locations with greater wind potential has led the best on-shore wind locations to become currently saturated. It is becoming more difficult to find areas with a high availability of unexploited wind energy.

The wind industry tends to exploit other on-shore locations with greater wind availability or to improve the already existing locations. To maximize the amount of energy produced at on-shore locations with less wind resource availability, or to improve already existing locations, the strategies adopted and those that set the market trends should be made by increasing the tower height. The wind speed increases with height due to friction against the ground, which leads to the wind shear profile. Since the energy produced changes with the cube of the wind speed, small increases in height allow for considerable increases in production.

To provide a solution to the problem of using areas with high winds but that are already occupied with other wind turbines, the possibility to replace the old turbines with new, taller turbines is proposed.

Along this line of using the already existing locations, and using the automatic raising system described in patent WO2015150594, a solution is presented for the raising of wind turbines that are operating in already existing locations, or for the raising of new wind turbines that require a greater height, which the conventional towers cannot satisfy. A second problem that solves the invention is to install 120 to 180 meter towers. Since this type of installation currently implies a significant increased cost because the cranes to be used are very complex and scarce in the market, it is therefore has a very low availability. For towers over 120 m, it is very difficult to locate an economically viable assembly system Further relevant prior art examples can be seen in ES 2 389 345 A1, US 2014/328632 A1 and JP 2005 042313 A.

### Description of the invention

The field of the invention is to design a tower section and its corresponding transition piece that is valid to automatic raising a tubular tower with its nacelle and the complete rotor mounted on the top part of the tower. This wind turbine may be one that is already existing and available at an on-shore location, together with other wind turbines, constituting what is denominated as a farm, or can be a new wind turbine that is wished to provide a greater height to take better advantage of the existing wind. In both cases, the same procedure will be followed throughout the automatic raising method.

The modular lattice tower section of the invention is designed to be automatic raising from the ground, without the need for cranes, and is made up of two different parts:
A bottom part, consisting of a straight lattice structure, with a collapse angle of 0°, of at least three columns, and made into 10 to 14 m high sections, so that these sections are modular and perfectly transportable in conventional trucks.

A transition between the tapered section and the lattice structure must be wide enough to allow for the necessary stability to be able to auto-raise a wind turbine supporting the incident wind and preventing its overturn due to wind on the rotor, tower or nacelle sections.

This and other fields of the invention are achieved by means of a lattice structure section, where each module that makes it up is composed to two kinds of longitudinal elements joined together:
Vertical columns, which support the main bending stresses on the tower from wind on the wind turbine rotor. Tightening elements (diagonal and horizontal) that react during moments of bending and shear stress generated by the wind.

The tightening elements are joined to the columns by means of plates welded with shear bolted joints. The tightening elements are joined together by means of shear bolted joints. The vertical columns are joined together by means of axial bolted joints, using circular flanges welded on each end. The diagonal and horizontal columns will have a closed geometry, preferably cylindrical.

There are two preferable configurations of tightening elements:
In the first configuration (K-joint), the tightening of each face of each module is made up of two horizontal and two diagonal tightening elements, which are joined at an equidistant point on the columns, at the height of the horizontal tightening elements.
In the second configuration (X-joint), the tightening of each side of each module is made up of four diagonal tightening elements, which are joined in the center of the face. To improve the sag stability of the diagonals, another three horizontal bars can be added that join the centers of each face.

The foundation of the tower segment (that supports the loads transferred by the complete wind turbine) is made up of three independent footings of square or rectangular geometry, manufactured on-site or prefabricated. Each prefabricated footing can be longitudinally subdivided into a number of prefabricated elements, which are manufactured in the plant view and then transported separately, assembled and post-tensioned on-site, by means of post-tensioned cables that cross the horizontal holes in the pieces of the footing. The prefabricated footings (subdivided or not) can be pre-tensioned to improve their structural performance.

The tower section is designed to be adapted to an automatic raising system of a complete wind turbine. This automatic raising system is already used in state of the art wind turbines (described in patent WO2015150594).

The raising method is made up of the following phases:
Phase 1: Preparing the foundation.
Phase 2: Assembling the transition and fastening to the foundation.
Phase 3: Assembling the tubular tower, nacelle and complete rotor of a wind turbine on the transition.
Phase 4: Installing the automatic raising system.
Phase 5: Fastening the automatic raising system to the bottom part of the transition, removing the foundation, lifting the top assembly.
Phase 6: Assembling the N module under the assembly.
Phase 7: Unfastening the automatic raising and fastening to the bottom part of the N module.
Phase 8: Lifting the N module with the top assembly.
Phase 9: Repeating steps 5-8 with each module.
Phase 10: Assembling the last module and removing the toolkit.

Everything described above provides the following advantages.

With the new automatic raising system, the assembly is performed by first lifting the top part of the lattice structure tower by means of hydraulic actuators to insert the following section through the bottom part, i.e., the work is performed on the ground. The assembly starts with the lifting of the lattice structure segment attached to the steel tower and ends with the installation of the tower segment closest to the ground. Also, the ground does not need to be conditioned since the installation of the lifting system with its joint structures is performed on the tower foundation footings. The main virtue of this technology is that its design was specifically created so that all the components of the wind turbine work during the assembly and when in operation. This way, by not needing additional reinforcements, the recurring cost of the wind turbine does not increase and the solution turns out to be extremely efficient. All the sections are transportable in conventional trucks, which is why the maximum expected length is 14 m.

### Brief description of the drawings

Below is a very brief description of a series of drawings that helps to better understand the invention. These drawings serve as a mere example and are expressly related yet not restricted to the making of this invention.
Figure 1a is a view of an existing wind turbine of the state of the art and figure 1b is a wind turbine with the lattice structure tower section of the invention.
Figures 2a and 2b show the performance due to the incident wind of a conventional wind turbine and on the wind turbine of the invention during the automatic raising process.
Figure 3 shows a detail of the transition piece, its anchor with the lifting system, its joint structures and the vertical columns.
Figures 4a, 4b and 4c show the preferential geometry of one of the foundation footings.
Figure 5a is a view of the foundation, 5b shows the transition module, 5c-5d-5e-5f show the assembly of a wind turbine using a crane.
Figures 6a, 6b, 6c and 6d show the automatic raising system and complete lifting of the N module. Figures 6e and 6f show the lifting and assembly of the N+1 module.
Figure 7 shows the process to assemble the rest of the modules until completing the tower section of the invention.

### Detail description of the invention

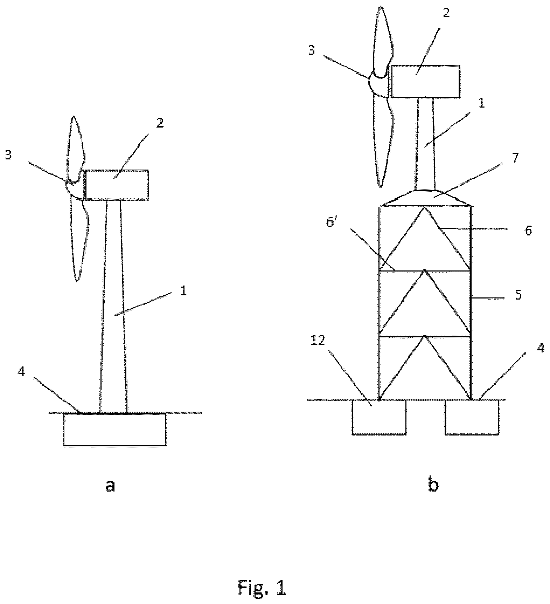

As shown in figure 1a, an existing 3000 kw wind turbine is made up of three or four cylindrical tower sections (1), a nacelle (2) and a complete rotor (3), i.e, with the blades already mounted. This wind turbine is lifted above the ground (4) a distance between 70 and 80 m, the diameter of its rotor (3) is about 120 m and its tower (1) has a maximum width of 4.5 at the base.

In figure 1b, another, taller wind turbine is shown mounted with a tower section made up of two parts: a bottom one, made of lattice modules of at least three vertical columns (5), with diagonals (6) and horizontals (6) between vertical columns (5).

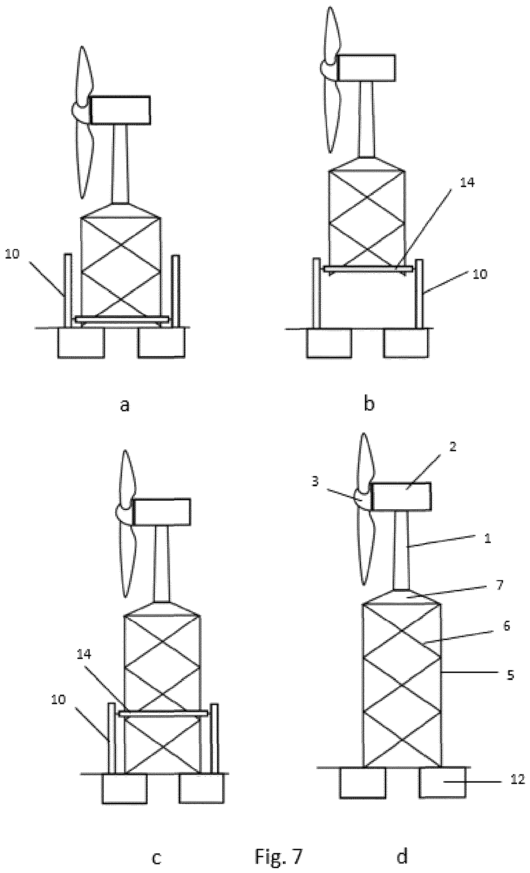

The tightening of the lattice structure modules are made up of:
a) two horizontals (6') and two diagonals (6), that are joined at an equidistant point from the vertical columns (5), at the height of the horizontals (figure 1b).
b) four diagonals (6) and more to improve the sag stability of the diagonals (6), another three horizontal bars are added that join the centers of each face (figure 7d).

And on the top part, the transition piece is available (7) between the tapered section of the tubular tower and the lattice section. All of this rests on an independent foundation (12).

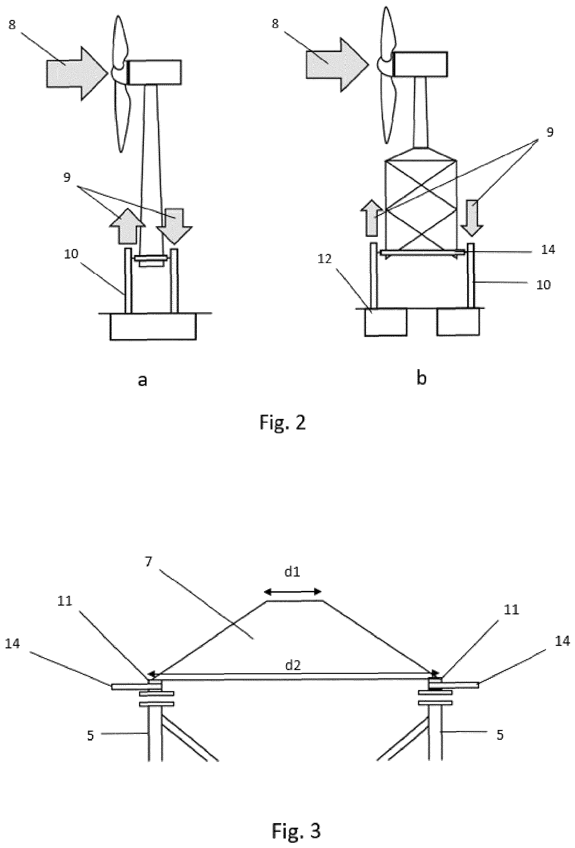

For raising without external cranes, the wind turbine already pre-mounted with its tower (1), its nacelle (2) and its rotor (3) in figure 1a, at a height between 120 and 180 m with respect to the ground (4), a technical problem must be resolved that appears with the incident wind (8). At heights over 100 m, the incident wind on the nacelle (2) and rotor (3) creates opposing forces (9) that will not be able to support a lifting system (10) using a conventional wind turbine (Figure 2a) that will support the wind turbine field of the invention (Figure 2b). This is because the width of the base of the lifting system (10) works at a distance of 5 m for the tubular wind turbine (Fig. 2a) and at a distance between 14 and 18 m for the wind turbine with lattice structure section (Fig. 2b). Only a lifting system (10) with enough distance between its actuators can support the incident wind (8) when it occurs.

To obtain enough distance between the vertical columns (5) of the lattice structure section, it is necessary to have a transition piece (7) as shown in figure 3. This hollow tapered piece goes from a top diameter (d1) of 3 to 4.5 m to a bottom base with a diameter of 14 to 18 m (d2) that confines the base. The shape of the base will depend on if the lattice structure tower has three, four or more vertical columns (5). The transition piece (7) has bottom interfaces (11) that connect to the lifting system (10). These bottom interfaces (11) are responsible for the connection with the vertical columns (5) of the lattice structure. With this transition piece (7), it is possible to achieve raising with wind conditions greater than 15 m/s.

The foundation (12) of the tower segment is made up of at least three independent footings, which include the connection elements (15) with the tower and a second connection area (16) of the automatic raising system. Due to the configuration of the segment, the total volume of the foundation is much less than that of a conventional wind turbine foundation. This may allow for its prefabrication in the pant view and its transportation to the field, in one piece or several pieces that are connected together on-site. The footings may have a square or rectangular section and may be pre-tensioned.

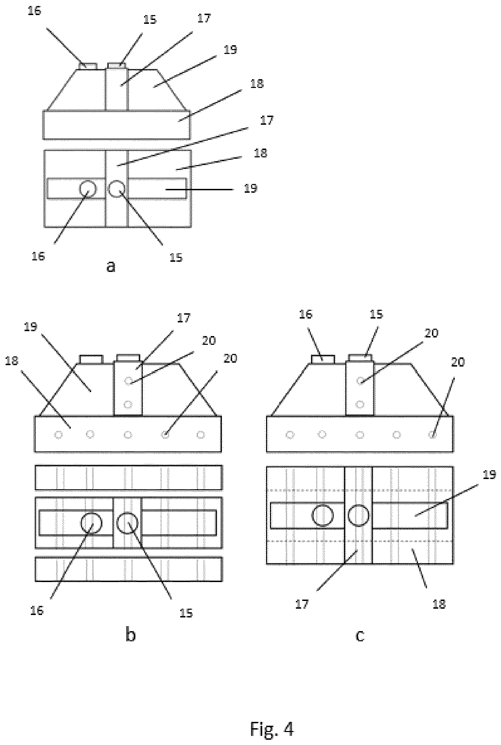

Figure 4b shows the footing once constructed (on-site, in the plant view or post-tensioning pieces on-site in the plant view), made up of a central wall (17), which stores the connection system (15) with the vertical column (5) or with the transition piece (7), a bottom slab (18), which distributes the load over the terrain, and at least one nerve (19) on each side of the wall, in which the connection (16) is integrated with the automatic raising system.

Figures 4c and 4d show the preferable subdivision for the alternative prefabricated foundation in different pieces (before and after the assembly), as well as the transverse holes (20) to position the tensing cables for the final post-tensioning process.

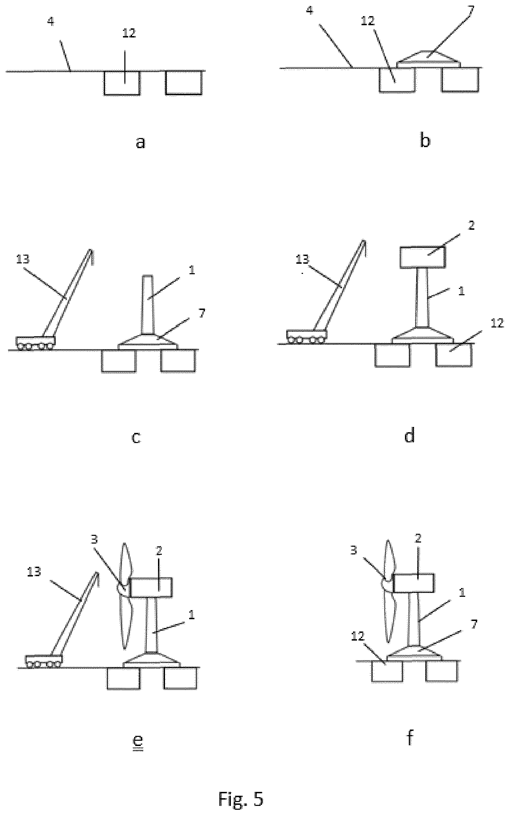

The raising method is shown among figures 5, 6 and 7 consists of the following phases:
Phase 1: Preparing the foundation (12).
Phase 2: Assembling the transition (7) and fastening to the foundation (12).
Phase 3: Assembling the tubular tower (1), nacelle (2) and rotor (3) of a wind turbine on the transition (7).
Phase 4: Installing the automatic raising system with its lifting system (10) and joint structures (14).
Phase 5: Fastening the automatic raising system to the bottom part of the transition, removing the foundation, lifting the top assembly.
Phase 6: Assembling the N module under the assembly.
Phase 7: Unfastening the automatic raising and fastening to the bottom part of the N module.
Phase 8: Lifting the N module with the top assembly.
Phase 9: Repeating steps 5-8 with each module.
Phase 10: Assembling the last module and removing the toolkit.

As shown in figure 5a, phase 1 is the preparation of the foundation (12). The first step is to establish the foundation (12) below ground level (4) and dimension it in accordance with the weights to be supported. The process starts with the excavation of as many independent foundations (12) as there are vertical columns (5) on lattice structure tower. The prefabricated foundations (12) are then positioned for this alternative process. Lastly, the foundation (12) is covered with filler and the terrain is reconstructed.

Figure 5b shows the assembly of the transition piece (7) that makes up the top part of the lattice structure tower. First, the bottom interfaces (11) will be installed on the connection element (15). Then the transition piece (7) is assembled on the work base made up of the aforementioned interfaces (11). (See Figure 3).

In figures 5c, 5d and 5e, the assembly process of the tubular tower (1), nacelle (2) and rotor (3) of a wind turbine are described, according to phase 3. In this phase, the assembly process of the tubular tower (1) is performed on the transition piece (7). After the tubular tower (1), the wind turbine nacelle (2) is assembled on the top flange of the tubular tower (1). Lastly, the wind turbine rotor (3) is installed with its corresponding assembly blades. The entire assembly is performed using a conventional crane (13).

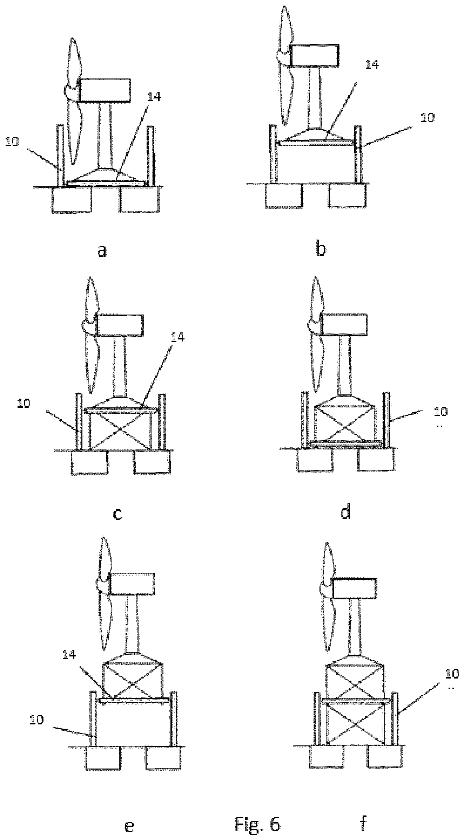

As shown in figure 6, once the wind turbine is mounted, its automatic raising method starts. In figures 6a and 6b, phases 4 to 8 are shown with the installation of the lifting system (10) and the lifting of the assembly. Once the tower (1), nacelle (2) and complete rotor (3) are mounted, the automatic raising toolkit is installed on the connection element (16) of the footing. I.e., on each foundation (12) will be installed as many lifting systems (10) and vertical columns (5) having the lattice structure tower with a joint structure (14) that is extended among all the lifting systems (10). The lifting of the installed assembly occurs when each of the lifting platforms go from the bottom point to the top point of the corresponding automatic raising system. (As described in WO2015150594).

Between figures 6c and 6f, phase 9 is shown, corresponding to the assembly of the new module. Once the assembly is lifted, a new tower module is inserted and the modules touching it are fastened. The connection flanges are released and then the lifting platforms making up the joint structure (14) between the lifting systems (10) are lowered. The insertion operation of a new module is subsequently repeated for the bottom part.

Lastly, in figure 7, phase 10 is shown with the assembly of the last module and uninstallation of the automatic raising system.

## Claims

1. Tower section for automatically raising a new or existing wind turbine, designed to be provided under its own wind turbine and by using an automatic raising system supported on independent foundations (12), lifting the entire assembly with the need of external cranes, **characterized in that**:
- the tower section is a modular lattice, with 10 to 14 m high modular sections, vertical columns (5) and a tightening system between columns (5), all transportable in conventional vehicles,
- it has at least three vertical columns (5) on the closed gap section, 0° collapse, separated from each other by 14 to 18 m, joined together by diagonal elements (6) and optionally by horizontal elements (6'), both of the circular closed section gap,
- it has a transition piece (7) that supports a conventional wind turbine on its top part, with a top diameter (d1) of 3 to 4.5 m and a bottom diameter (d2) of 14 to 18 m, as well as an interface (11) at its base with anchor systems to attach yourself to the column (5) and temporarily to the connection element (15) of the footing,
- each of the modules that make up the tower section and transition piece (7) have external elements for anchoring to the auto-raising system, and
- the entire assembly, with the tower section and complete wind turbine, can be automatic raising with an automatic raising system made up of a lifting system (10) and a joint structure (14) that are attached to a connection element (16) of the footing.

2. Tower section according to claim 1, wherein the foundation (12) is made up of as many square or rectangular footings as vertical columns (5) of the tower and has dimensions that allow for its prefabrication and transportation in conventional vehicles.

3. Tower section according to claim 2, wherein the footing is longitudinally subdivided into a number of prefabricated elements, which are manufactured in the plant view and then transported separately, assembled and post-tensioned on-site, by means of post-tensioned cables that cross the horizontal holes in the pieces of the footing.

4. Tower section according to claim 2 or claim 3, wherein the prefabricated pieces are pre-tensioned to improve their structural performance.

5. Tower section according to claim 1, wherein the tightening system of each face of each module is made up of two horizontal (6') and two diagonal (6) tightening elements, which are jointed at an equidistant point from the vertical columns (5), at the height of the horizontal tightening elements.

6. Tower section according to claim 1, wherein the tightening system of each face of each module is made up of four diagonal (6) tightening elements, which are jointed in the center of the face.

7. Tower section according to the previous claim, wherein to improve the sag stability of the diagonals (6), another three horizontal bars are added that join the centers of each face.

8. Tower section according to claim 1, wherein all the elements are joined by bolted joints through the elements welded to the tubular profile gaps.

9. Automatic raising method of the tower section with a complete wind turbine on its top part, **characterized in that** the method comprises steps of:
Phase 1: Preparing the foundation (12) below ground level (4), providing as many independent foundations (12) as vertical columns (5), placing the prefabricated foundations (12), filler and reconditioning the terrain.
Phase 2: Assembling and fastening the transition piece (7) to the foundation (12) through the existing interfaces (11) on its base and the connection elements (15) of the footing.
Phase 3: Assembling a nacelle (2) and a rotor (3) of a wind turbine using a crane (13) on the transition (7) of the tubular tower (1).
Phase 4: Installing the automatic raising system on the foundation (12) that includes the assembly of the lifting system (10) and the joint structure (14) on the joint element (16) of the footing.
Phase 5: Fastening the automatic raising system to the bottom part of the transition (7), removing the legs (11) to the foundation (12) and lifting the top assembly.
Phase 6: Assembling the N module under the assembly.
Phase 7: Unfastening the automatic raising and fastening to the bottom part of the N module.
Phase 8: Lifting the N module with the top assembly.
Phase 9: Repeating steps 5-8 on each module.
Phase 10: Assembling the last module and removing the toolkit.

## Patentansprüche

1. Turmabschnitt zum automatischen Anheben einer neuen oder bestehenden Windturbine, welcher dazu gestaltet ist, unter dessen eigenen Windturbine bereitgestellt zu werden und, unter Verwendung eines automatischen Anhebesystems, welches auf unabhängigen Fundamenten (12) gestützt ist, die gesamte Baugruppe zu heben, ohne dass äußere Kräne nötig sind, **dadurch gekennzeichnet, dass**:
- der Turmabschnitt ein modulares Gitterwerk ist, mit 10 bis 14 m hohen modularen Abschnitten, vertikalen Säulen (5) und einem Klemmsystem zwischen den Säulen (5), welche alle in herkömmlichen Fahrzeugen transportierbar sind,
- er mindestens drei vertikale Säulen (5) mit geschlossenem Lückenabschnitt, 0°-Einsturz, 14 bis 18 m voneinander getrennt, aufweist, welche durch diagonale Elemente (6) und wahlweise durch horizontale Elemente (6') miteinander verbunden sind, beide mit kreisförmiger geschlossener Abschnittslücke,
- er ein Übergangsstück (7) aufweist, welches eine herkömmliche Windturbine auf dessen oberen Teil stützt, mit einem oberen Durchmesser (d1) von 3 bis 4,5 m und einem unteren Durchmesser (d2) von 14 bis 18 m, sowie eine untere Kontaktfläche (11) an deren Basis mit Verankerungssystemen dich an der Säule (5) und vorläufig am Verbindungselement (15) der Gründung zu befestigen,
- jedes der Module, welche den Turmabschnitt und das Übergangsstück (7) bilden, äußere Elemente zur Verankerung des automatischen Anhebesystems aufweisen, und
- die gesamte Baugruppe, mit dem Turmabschnitt und der kompletten Windturbine, mit einem automatischen Anhebesystem gebildet aus einem Hebesystem (10) und einer Verbindungsstruktur (14), welche an einem Verbindungselement (16) der Gründung befestigt sind, automatisch angehoben werden kann.

2. Turmabschnitt nach Anspruch 1, wobei das Fundament (12) aus so vielen quadratischen oder rechteckigen Gründungen wie vertikalen Säulen (5) des Turms gebildet ist und Abmessungen aufweist, welche dessen Vorfertigung und Transport in herkömmlichen Fahrzeugen erlauben.

3. Turmabschnitt nach Anspruch 2, wobei die Gründung längs in eine Anzahl von vorgefertigten Elementen unterteilt ist, welche in Anlageansicht gefertigt werden und dann separat transportiert, vor Ort montiert und mittels nachgespannten Kabel, welche die horizontalen Löcher in den Stücken der Gründung überqueren, nachgespannt.

4. Turmabschnitt nach Anspruch 2 oder Anspruch 3, wobei die vorgefertigten Stücke vorgespannt werden, um deren strukturellen Leistung zu verbessern.

5. Turmabschnitt nach Anspruch 1, wobei das Klemmsystem jeder Fläche von jedem Modul aus zwei horizontalen Klemmelementen (6') und zwei diagonalen Klemmelementen (6) gebildet ist, welche an einem äquidistanten Punkt von den vertikalen Säulen (5), auf der Höhe der horizontalen Klemmelemente, verbunden sind.

6. Turmabschnitt nach Anspruch 1, wobei das Klemmsystem jeder Fläche von jedem Modul aus vier diagonalen Klemmelementen (6) gebildet ist, welche in der Mitte der Fläche verbunden sind.

7. Turmabschnitt nach dem vorhergehenden Anspruch, wobei, um die Absackstabilität der Diagonalen (6) zu verbessern, weitere drei horizontalen Stangen hinzugefügt werden, welche die Mitten jeder Fläche verbinden.

8. Turmabschnitt nach Anspruch 1, wobei alle Elemente durch Schraubenverbindungen über die an die rohrförmigen Profillücken angeschweißten Elemente verbunden werden.

9. Verfahren zum automatischen Anheben des Turmabschnittes mit einer kompletten Windturbine auf dessen oberen Teil, **dadurch gekennzeichnet, dass** das Verfahren die folgenden Schritte umfasst:
Stufe 1: Das Zubereiten des Fundaments (12) unter der Bodenhöhe (4), sodass so viele unabhängige Fundamente (12) wie vertikale Säulen (5) bereitgestellt werden, die vorgefertigten Fundamente (12) und das Füllmaterial platziert werden und das Gelände aufgearbeitet wird,
Stufe 2: Das Montieren und das Fixieren des Übergangsstücks (7) am Fundament (12) über die bestehenden unteren Kontaktflächen (11) auf dessen Basis und die Verbindungselementen (15) der Gründung,
Stufe 3: Das Montieren einer Gondel (2) und eines Rotors (3) einer Windturbine unter Verwendung eines Krans (13) am Übergang (7) des rohrförmigen Turms (1),
Stufe 4: Das Installieren des automatischen Anhebesystems auf dem Fundament (12), welches die Baugruppe des Hebesystems (10) und der Verbindungsstruktur (14) auf dem Verbindungselement (16) der Gründung beinhaltet,
Stufe 5: Das Fixieren des automatischen Anhebesystems am unteren Teil des Übergangs (7), das Entfernen der unteren Kontaktflächen (11) des Fundaments (12) und das Heben der oberen Baugruppe,
Stufe 6: Das Montieren des N-Moduls unter der Baugruppe,
Stufe 7: Das Lösen des automatischen Anhebens und das Fixieren am unteren Teil des N-Moduls,
Stufe 8: Das Heben des N-Moduls mit der oberen Baugruppe,
Stufe 9: Das Widerholden der Schritte 5-8 bei jedem Modul,
Stufe 10: Das Montieren des letzten Moduls und das Entfernen des Werkzeugsatzes.

## Revendications

1. Segment de tour pour auto-hisser une éolienne nouvelle ou existante, conçue pour être prévue sous sa propre éolienne et utilisant un système d'auto-hissage supporté sur des fondations indépendantes (12), soulevant tout l'ensemble sans la nécessité de grues externes, **caractérisée en ce que** :
- le segment de tour est un treillis modulaire, avec des sections modulaires d'une hauteur de 10 à 14 m, des colonnes verticales (5) et un système de serrage entre les colonnes (5), le tout transportable dans des véhicules conventionnels,
- il possède au moins trois colonnes verticales (5) de section d'écart fermé, 0° d'effondrement séparées l'une de l'autre par 14 ou 18 m, réunies ensemble par des éléments diagonaux (6) et optionnellement par des éléments horizontaux (6'), tous deux d'écart de section fermé circulaire,
- il possède une pièce de transition (7) qui supporte une éolienne conventionnelle sur sa partie supérieure, avec un diamètre supérieur (d1) de 3 à 4,5 m et un diamètre inférieur (d2) de 14 à 18 m, ainsi qu'une interface inférieure (11) à sa base avec des systèmes d'ancrage pour la fixation à la colonne (5) et de manière temporaire à l'élément de connexion (12) du socle,
- chacun des modules qui constituent le segment de tour et la pièce de transition (7) ont des éléments externes pour ancrer le système d'auto-hissage, et
- tout l'ensemble, avec le segment de tour et l'éolienne complète, peut s'auto-hisser avec un système d'auto-hissage constitué d'un système de soulèvement (10) et une structure de joint (14) qui sont fixés à un élément de connexion (16) du socle.

2. Segment de tour selon la revendication 1, dans lequel la fondation (12) est constituée d'autant de socles carrés ou rectangulaires que de colonnes verticales (5) de tour et il comporte des dimensions qui permettent sa préfabrication et son transport dans des véhicules conventionnelles.

3. Segment de tour selon la revendication 2, dans lequel le socle est sous-divisé longitudinalement en un nombre d'éléments préfabriqués, qui sont fabriqués dans la vue du site et ensuite transportés séparément, assemblés et post-tendus sur place, par le biais de câbles post-tendus qui traversent les trous horizontaux dans les pièces du socle.

4. Segment de tour selon la revendication 2 ou la revendication 3, dans lequel les pièces préfabriquées sont pré-tendues pour améliorer la performance structurale.

5. Segment de tour selon la revendication 1, dans lequel le système de serrage de chaque face de chaque module est constituée de deux éléments de serrage horizontaux (6') et deux diagonaux (6), qui sont unis à un point équidistant des colonnes verticales (5) à la hauteur des éléments de serrage horizontaux.

6. Segment de tour selon la revendication 1, dans lequel le système de serrage de chaque face de chaque module est constitué de quatre éléments de serrage diagonaux (6), qui sont unis au centre de la face.

7. Segment de tour selon la revendication précédente, dans lequel pour améliorer la stabilité de flèche des éléments diagonaux (6), trois autres barres horizontales sont ajoutées en unissant les centres de chaque face.

8. Segment de tour selon la revendication 1, dans lequel tous les éléments sont unis par des assemblages boulonnés à travers les éléments soudés aux écarts de profile tubulaire.

9. Procédé d'auto-hissage du segment de tour avec une éolienne complète sur sa partie supérieure, **caractérisé en ce que** le procédé comprend les étapes de :
- Phase 1 : préparation de la fondation (12) sous le niveau du terrain (4), en fournissant autant de fondations indépendantes (12) que de colonnes verticales (5), en mettant en place les fondations préfabriquées (12), le matériel de remplissage et en réaménageant le terrain,
- Phase 2, l'assemblage et la fixation de la pièce de transition (7) à la fondation (12) à travers les interfaces inférieures existantes (11) sur sa base et les éléments de connexion (15) du socle,
- Phase 3 : l'assemblage d'une nacelle (2) et un rotor (3) d'une éolienne utilisant une grue (13) sur la transition (7) de la tour tubulaire (1),
- Phase 4 : l'installation du système d'auto-hissage sur la fondation (12) qui comporte l'assemblage du système de soulèvement (10) et la structure de joint (14) sur l'élément de joint (16) du socle,
- Phase 5 : la fixation du système d'auto-hissage à la partie inférieure de la transition (7), en retirant les interfaces inférieures (11) de la fondation (12) et en soulevant l'ensemble supérieur,
- Phase 6 : l'assemblage de N modules sous l'ensemble,
- Phase 7 : desserrage de l'auto-hissage et sa fixation à la partie inférieure de N modules,
- Phase 8 : le soulèvement de N modules avec l'ensemble supérieur,
- Phase 9 : la répétition des étapes 5-8 sur chaque module,
- Phase 10 : l'assemblage du dernier module et le retrait de la panoplie de travail.
